# FASCICULE DE BREVET EUROPEEN

(11) **EP 2 294 379 B1**
(45) Date de publication et mention de la délivrance du brevet: **15.02.2012**
(21) Numéro de dépôt: 09784210.8
(22) Date de dépôt: 16.06.2009
(51) Int. Cl.: G01M 11/02

(54) **PROCÉDÉ ET DISPOSITIF POUR LA MESURE DE DISTANCES FOCALES D' UN SYSTÈME DIOPTRIQUE QUELCONQUE**
VORRICHTUNG UND VERFAHREN ZUR MESSUNG DER FOKUSLÄNGE EINES BELIEBIGEN DIOPTRIESYSTEMS
METHOD AND DEVICE FOR MEASURING FOCAL LENGTHS OF ANY DIOPTRIC SYSTEM

(30) Priorité: 30.06.2008 FR 0803731
(43) Date de publication de la demande: 16.03.2011
(73) Titulaire: Phasics, 91450 Soisy-Sur-Seine (FR)
(72) Inventeur: WATTELLIER, Benoît, F-75012 Paris (FR); BOUCHER, William, F-78280 Guyancourt (FR)
(74) Mandataire: Novagraaf Technologies
(86) Numéro de dépôt international: PCT/FR2009/000718
(87) Numéro de publication internationale: WO 2010/004110

(56) Documents cités:
- DE-A1- 19 530 027
- NEAL D R; COPLAND R J; NEAL D A; TOPA D M; RIERA P: "Measurement of lens focal length using multicurvature analysis of Shack-Hartmann wavefront data" PROCEEDINGS OF THE SPIE - THE INTERNATIONAL SOCIETY FOR OPTICAL ENGINEERING, vol. 5523, 5 août 2004 (2004-08-05), pages 243-255, XP002516597 Bellingham, WA, USA
- TEBALDI M ET AL: "Self-imaging pitch variation applied to focal length digital measurements" OPTICS COMMUNICATIONS, NORTH-HOLLAND PUBLISHING CO. AMSTERDAM, NL, vol. 250, no. 1-3, 1 juin 2005 (2005-06-01), pages 10-15, XP004892363 ISSN: 0030-4018

## Description

L'invention concerne un procédé et un dispositif pour la mesure de distances focales d'un système dioptrique quelconque.

Dans la mesure de focale de système optique, il existe deux méthodes connues respectivement sous le nom de méthode de Bessel et méthode de Silberman. La méthode de Bessel nécessite de connaître initialement la valeur présumée de la distance focale du système. Un plan objet lumineux tel qu'une mire et un plan image tel qu'un écran sont positionnés sur un banc optique à une distance supérieure à quatre fois la valeur présumée. Dans ces conditions, les lois de l'optique géométrique prévoient qu'il existe deux positions du système entre le plan objet et le plan image qui conjuguent exactement la mire et l'écran. On déduit aisément la valeur de la distance focale du système. Dans la méthode de Silberman, on choisit une distance entre les plans objet et image telle qu'il n'existe plus qu'une position du système pour assurer la conjugaison. Dans ces conditions, la valeur de la distance de la focale du système est exactement le quart de la valeur de la distance séparant les deux plans. On comprend que ces deux méthodes soient réservées à des systèmes convergents puisque le couple de plans est nécessairement réel. Couramment, ces méthodes permettent de mesurer les distances focales de lentilles minces convergentes.

Il existe dans le commerce des instruments spécialisés dans la mesure de focale, connus sous le nom de frontofocomètres. Certains ont un fonctionnement manuel et d'autres sont automatisés. Conçus pour mesurer des verres de correction de la vue, c'est à dire des lentilles minces ou peu épaisses, convergentes ou divergentes. Ces instruments utilisent une méthode de mesure simple. Un collimateur placé sur un support mécanique mobile en translation forme une image à l'infini d'une mire fixe éclairée par une source de lumière annexe. Un objectif convergent focalise cette lumière et un oculaire permet à l'opérateur d'observer l'image de la mire. L'échantillon est positionné sur le support mobile au foyer image du collimateur. L'opérateur déplace le support du collimateur jusqu'à observer une nouvelle image nette de la mire. Le déplacement est directement proportionnel à la vergence de l'échantillon. Le principe des frontofocomètres est largement décrit dans le site internet de l'Université de Nantes :

### www.sciences.univ-nantes.fr/physique/perso/cortial/bibliohtml

La présente invention concerne la mesure de distances focales de systèmes dioptriques. Il est entendu :
- que la nature d'un système dioptrique peut être sphérique, asphérique, cylindrique, torique ou s'apparenter à des surfaces géométriques plus complexes ;
- qu'un système dioptrique peut être évalué localement, c'est-à-dire pour une zone réduite de son ouverture de façon à ce que les angles d'incidence des rayons lumineux sur les dioptres et les angles des faisceaux sur l'axe de propagation soient faibles. On peut alors négliger toute quantité du deuxième ordre (ou plus) par rapport aux paramètres angulaires. On dit alors que la marche des rayons lumineux satisfait à l'approximation de Gauss ou que les calculs optiques se font dans le domaine paraxial ;
- que, dans cette approximation, il existe, notamment pour un système dioptrique, deux plans principaux parallèles et deux foyers situés sur un axe perpendiculaire aux plans principaux ;
- que, dans cette approximation et selon l'espace dans lequel ils évoluent, les plans principaux et les foyers sont qualifiés de plans et foyers objets ou images ; les plans principaux et les foyers étant conjugués les uns des autres dans le système dioptrique auxquels ils appartiennent ;
- que, dans cette approximation et après avoir choisi le sens de propagation de la lumière comme sens positif, la distance focale d'une zone éclairée d'un système dioptrique plongé dans un même milieu, l'air en l'occurrence, est mesurée algébriquement par la plus petite distance algébrique comprise entre le plan principal image et le foyer image ou entre le foyer objet et le plan principal objet ; une focale positive indiquant la convergence et une focale négative indiquant une divergence du système ;
- que, selon les zones d'éclairement choisies, la position et l'éloignement des plans principaux et des foyers peuvent varier, on parle alors de systèmes dioptriques multifocales,
- que, pour une zone éclairée et étendue, les foyers peuvent être déformés par des aberrations géométriques ou chromatiques. Lors d'observation d'aberrations géométriques, on quitte alors le domaine paraxial et l'approximation de Gauss. Les mesures des distances focales de l'invention sont couramment faites dans l'approximation de Gauss, condition qui impose souvent une zone éclairée réduite dans l'ouverture totale disponible du système. Dans l'approximation de Gauss, l'altération des mesures par les aberrations reste totalement négligeable,
- qu'un analyseur de faisceau a pour fonction principale d'analyser la surface d'onde d'un faisceau en mesurant une quantité liée aux gradients et/ou à la courbure locale de la phase de l'onde. Les analyseurs actuels sont répartis en deux classes ; les analyseurs les moins performants utilisent une grille de trous ou un réseau de microlentilles et une caméra CCD, pour mettre en oeuvre les techniques dites de Hartmann et de Shack-Hartmann. Une présentation de ces techniques est faite sur le site internet suivant :
   www.institutoptique.fr/telechargement/presentation shack hartmann.ppt

Les analyseurs les plus performants utilisent un réseau de phase et d'amplitude et une caméra CCD. Ces derniers utilisent la technologie de l'interférométrie à décalage et offrent une précision inégalée dans la mesure de la phase d'une onde.

Une présentation de la technologie de l'interférométrie à décalage est faite sur le site internet suivant :
www.phasics.fr/fr/technologies.php
D'autres procédés et dispositifs pour la mesure de distances focales sont connus des documents DE 195 30 027 et Neal, Copeland et al. "Measurement of lens focal length using multicurvature analysis of Shack-Hastmann wavefront data" PROC SPIE, 5523, 243-255.

La présente invention a pour premier but d'offrir un procédé pour la mesure précise de distances focales d'un système dioptrique quelconque.

La présente invention a également pour but de fournir un dispositif de mesure de distances focales d'un système dioptrique, de composition simple, ne nécessitant pas d'étude complexe pour sa réalisation et sa mise au point.

L'invention a également pour but de fournir un procédé et un dispositif pour lesquels les critères de reproductibilité et de répétabilité répondent aux définitions de la norme internationale ISO 11972-2.

Les caractéristiques et les avantages de l'invention apparaîtront à l'examen de la description détaillée ci-après et des dessins annexés, sur lesquels :
- la figure 1 présente l'environnement physique et les propriétés optiques qui définissent le procédé de la mesure ;
- la figure 2 présente le dispositif selon un mode de réalisation.

L'invention offre tout d'abord un procédé pour la mesure de distances focales d'un système dioptrique.

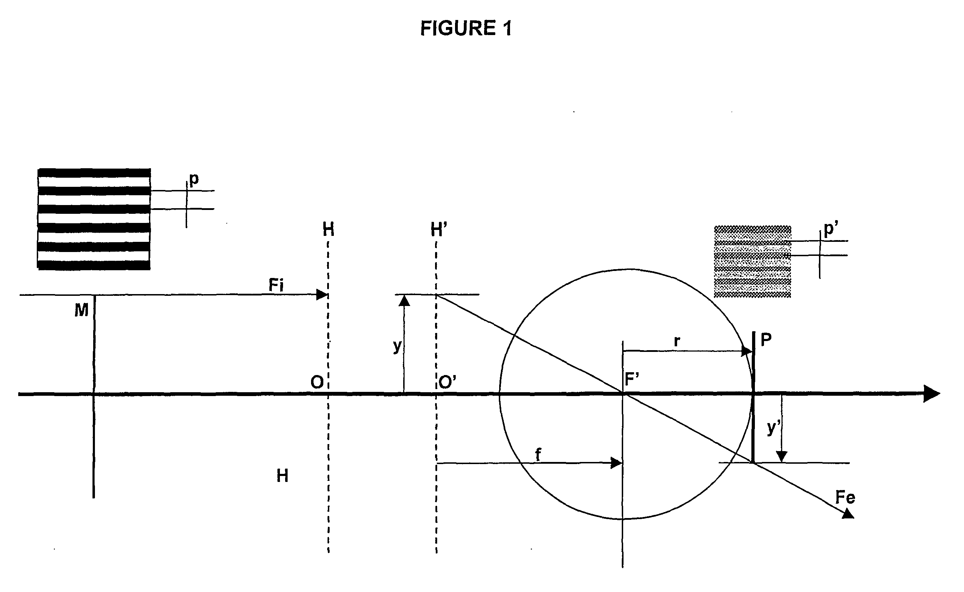

La figure 1 illustre le procédé de mesure pour un système dioptrique épais convergent représenté par ses plans principaux H et H' dont des traces O et 0' sont sur l'axe de propagation de la lumière. Le faisceau incident, représenté par un rayon incident Fi, est issu d'une source de lumière, placée au foyer d'un collimateur. Il traverse le plan M composé par exemple, d'une mire « créneau » de période p qui ne laisse passer que la moitié de la lumière. Dans le champ proche de la mire, la modulation du faisceau est fortement contrastée. Une représentation projetée de cette mire est schématisée sur la figure 1. Le faisceau émergent représenté par le rayon Fe, a une ouverture numérique compatible avec le domaine paraxial et couvre au minimum toute la pupille d'entrée P de l'analyseur de faisceau. Dans le cas le plus général, le plan image de la mire est réel ou virtuel selon la nature du système dioptrique mais sa position n'est pas recherchée dans le procédé. Le plan de l'analyseur de faisceau enregistre une modulation du faisceau émergent sous un contraste réduit dont la période est p'. Une représentation projetée de cette modulation est schématisée sur la figure 1. La période p' est comparée à la période p de la mire. Les extensions transversales y et y' du faisceau sur les plans principaux et sur le plan du détecteur sont dans le même rapport d'homothétie que les deux périodes p et p'. Par application du théorème de Thalès, la distance focale f est égale au rapport d'homothétie p/p' multiplié par la valeur algébrique du rayon de courbure r de l'onde émergente mesurée par l'analyseur de faisceau.

En résumé, le procédé est caractérisé par les opérations suivantes :
a) on constitue, à l'aide d'une source de lumière et un collimateur, un faisceau de lumière globalement parallèle dont on contrôle l'extension transversale par un calibre mécanique,
b) on prévoit de positionner dans le faisceau de lumière collimaté, une mire périodique semi-transparente dont la forme et la période p sont choisies selon la nature, notamment sphérique, asphérique, cylindrique, ou torique du système dioptrique à évaluer,
c) on applique tout ou partie du faisceau de lumière venant de la mire dans une zone du système dioptrique à évaluer, en s'assurant que la valeur de l'ouverture numérique du faisceau émergent rende compatibles les approximations du domaine paraxial,
d) on observe le faisceau émergent du système dioptrique avec un analyseur de faisceau mobile selon l'axe de propagation de la lumière, de façon à ce qu'il couvre au minimum, la pupille d'entrée de l'analyseur,
e) on mesure à l'aide de l'analyseur de faisceau d'une part, la période p' du flux lumineux émergent et d'autre part, la valeur algébrique du rayon de courbure r de l'onde émergente (positif ou négatif selon la nature divergente ou convergente de l'onde),
f) on déduit de ces mesures la valeur de la distance focale f dans la zone éclairée du système dioptrique, valeur formée par le rapport d'homothétie p/p' multiplié par r.

Le procédé utilise la mesure d'un rapport d'homothétie entre la période de la mire et la période de modulation du faisceau émergent dans un quelconque plan de l'espace image pourvu qu'il couvre au minimum, la pupille d'entrée de l'analyseur.

Ainsi, le procédé est caractérisé en ce qu'il n'utilise aucune imagerie. En effet, l'image de la mire peut être réelle ou virtuelle, proche ou éloignée du plan d'observation de l'analyseur. Le contraste de la modulation du faisceau observé reste toujours suffisant pour assurer une mesure précise de la période de modulation.

Un autre avantage annexe au procédé consiste à analyser le faisceau émergent sur toute l'ouverture du système de façon à en apprécier la totalité de la surface d'onde et à en mesurer les éventuelles aberrations.

L'invention offre également un dispositif pour la mesure de distances focales d'un système dioptrique.

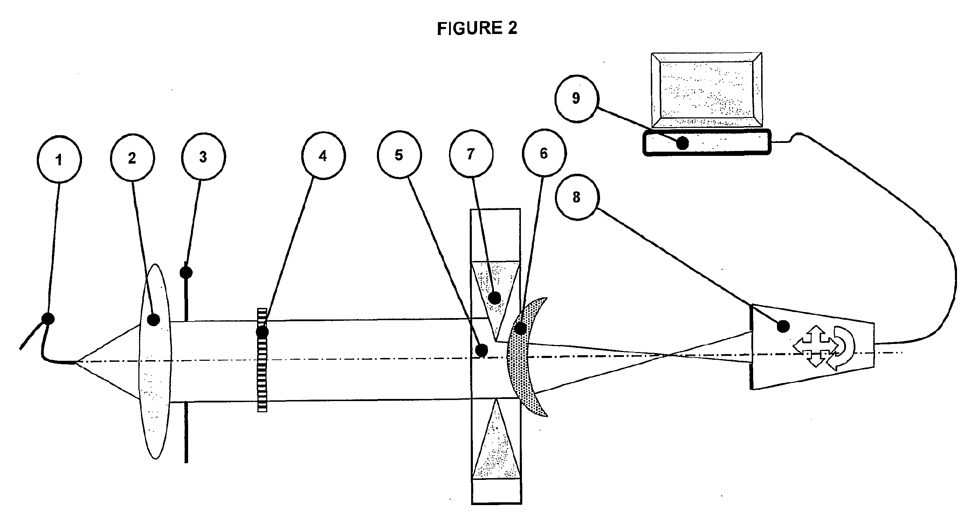

La figure 2 illustre plus en détail un mode de réalisation du dispositif.

La source de lumière (non schématisée sur la figure) est acheminée par une fibre optique 1 dont l'extrémité est placée au foyer objet d'un collimateur 2. Le faisceau qui émerge du collimateur est globalement parallèle et son extension transversale est limitée par un calibre 3 ajustable et couramment circulaire. Couramment, la source de lumière est une LED ou un émetteur laser du commerce. La mire périodique 4 est un modulateur passif de flux à fort contraste. La forme et la période de la mire sont choisies selon la nature du système optique de façon à faciliter la mesure et la précision de celle-ci. Ainsi, une mire « créneau » constituée de fentes périodiques sera adaptée à la mesure de focale d'une lentille cylindrique en prenant soin d'orienter la mire correctement par rapport à la lentille. Le système dioptrique 6 à évaluer est positionné sur un plateau 5 qui possède un diaphragme 7 ajustable et mobile selon deux mouvements de translation placés dans un plan perpendiculaire au faisceau de lumière. Ce diaphragme permet de limiter l'éclairage du faisceau sur une zone particulière du système en limitant l'ouverture numérique dans laquelle la distance focale sera mesurée. On reste ainsi dans le domaine paraxial. Cette facilité permet également la mesure de la distance focale de zone à zone pour déterminer toutes les éventuelles distantes focales du système. L'analyseur de faisceau 8 possède au minimum un mouvement de translation parallèle à l'axe de propagation de la lumière, mais plus généralement, des mouvements de translation et de rotation assurent une bonne couverture du faisceau sur sa pupille d'entrée. Cet analyseur de faisceau a une double fonction : il relève simultanément, dans une position donnée, la période de modulation du faisceau émergent et la valeur algébrique du rayon de courbure de l'onde associée. L'analyseur est relié à un ordinateur 9 équipé des algorithmes d'évaluation du front d'onde pour en extraire la valeur algébrique du rayon de courbure de l'onde émergente, et d'un logiciel qui permet le calcul de la période de modulation du faisceau et le calcul de la valeur de la distance focale du système dioptrique.

Une variante du dispositif consiste à ce que le diaphragme 7 soit supprimé ou totalement ouvert de façon à éclairer une zone étendue du système, le faisceau émergent débordant largement sur la pupille d'entrée de l'analyseur 8, l'ouverture numérique du faisceau analysé est alors fixée par la pupille de l'analyseur.

Le dispositif peut employer un analyseur de faisceau utilisant la technique du Shack-Hartmann ou de Hartmann. Les performances du dispositif sont alors fortement dépendantes du réseau de microlentilles ou de la grille de trous.

Le dispositif peut employer un analyseur de faisceau utilisant la technologie de l'interférométrie à décalage. Les performances sont excellentes et satisfont au critère de la norme ISO 11979-2.

Le dispositif testé avec un analyseur de faisceau utilisant la technologie de l'interférométrie à décalage fabriqué par la Société Phasics (www.phasics.fr) fournit, pour un échantillon commercial de lentille épaisse des valeurs d'évaluation de mesure de focale comparables à celles fournies, pour le même échantillon, par la méthode de mesure préconisée par la norme ISO 11979-2 ; le tableau suivant compare les résultats sachant que critères de mesure des écarts-type de répétabilité et de reproductibilité sont mesurés selon la norme.

| | | Norme | Invention |
|---|---|---|---|
| | Valeur moyenne de f (mm) | 14.98 | 14.91 |
| Lentille biconvexe de | Ecart-type répétabilité (mm) | 0.05 | 0.06 |
| + 66,6 dioptries | Ecart-type reproductibilité (mm) | 0.18 | 0.04 |
| | Erreur relative (%) | 1.23 | 0.25 |

En résumé, le dispositif est caractérisé en ce qu'il comporte :
- un générateur de faisceau lumineux collimaté et calibré comprenant une source de lumière (LED ou émetteur laser) acheminée par une fibre optique 1, un collimateur 2 et un calibre 3 permettant d'ajuster l'extension transversale du faisceau lumineux,
- une mire 4 périodique semi-transparente modulant le faisceau incident selon une période fixe avec un fort contraste,
- un support mécanique 5 destiné à recevoir le système dioptrique 6 à évaluer et éventuellement un diaphragme 7 réglable muni de deux mouvements de translation permettant de choisir la zone d'éclairage sur le système,
- un analyseur de faisceau 8 mobile en translation et orientable en position mesurant la modulation périodique du faisceau et la valeur algébrique du rayon de courbure de l'onde émergente,
- un ordinateur 9 équipé d'algorithmes d'évaluation du front d'onde et d'un logiciel de calcul de la période de modulation du faisceau émergent, fournissant la valeur de la distance focale du système dioptrique dans le domaine paraxial.

Le dispositif est principalement adapté à la mesure de distances focales pour des applications métrologiques, notamment dans les domaines de l'ophtalmologie et de l'instrumentation scientifique ou industrielle.

## Revendications

1. Procédé pour la mesure de distances focales d'un système dioptrique quelconque, comprenant les opérations suivantes :
a) on constitue, à l'aide d'une source de lumière et un collimateur, un faisceau de lumière globalement parallèle dont on contrôle l'extension transversale par un calibre mécanique,
b) on prévoit de positionner dans le faisceau de lumière collimaté, une mire périodique semi-transparente dont la forme et la période p sont choisies selon la nature, notamment sphérique, asphérique, cylindrique, ou torique du système dioptrique à évaluer,
c) on applique tout ou partie du faisceau de lumière venant de la mire dans une zone du système dioptrique à évaluer, en s'assurant que la valeur de l'ouverture numérique du faisceau émergent rende compatibles les approximations du domaine paraxial,
d) on observe le faisceau émergent du système dioptrique avec un analyseur de faisceau mobile selon l'axe de propagation de la lumière, de façon à ce qu'il couvre au minimum, la pupille d'entrée de l'analyseur,
e) on mesure à l'aide de l'analyseur de faisceau d'une part, la période p' du flux lumineux émergent et d'autre part, la valeur algébrique du rayon de courbure r de l'onde émergente (positif ou négatif selon la nature divergente ou convergente du faisceau),
f) on déduit de ces mesures la valeur de la distance focale f dans la zone éclairée du système dioptrique, valeur formée par le rapport d'homothétie p/p' multiplié par r.

2. Procédé selon la revendication 1, **caractérisé en ce qu'**il n'utilise aucune imagerie.

3. Procédé selon la revendication 1, **caractérisé en ce qu'**il utilise la mesure d'un rapport d'homothétie entre la période de la mire et la période de modulation d'un faisceau émergent dans un quelconque plan de l'espace image pourvu qu'il couvre au minimum, la pupille d'entrée de l'analyseur.

4. Procédé selon les revendications précédentes, **caractérisé en ce qu'**il analyse un faisceau sur toute l'ouverture du système de façon à en apprécier la totalité de la surface d'onde et à mesurer les éventuelles aberrations.

5. Dispositif pour la mesure de distances focales d'un système dioptrique quelconque comportant:
- un générateur de faisceau lumineux collimaté et calibré comprenant une source de lumière (LED ou émetteur laser), acheminée par une fibre optique 1, un collimateur 2 et un calibre 3 permettant d'ajuster l'extension transversale du faisceau lumineux,
- une mire 4 périodique semi-transparente modulant le faisceau incident selon une période fixe avec un fort contraste,
- un support mécanique 5 destiné à recevoir le système dioptrique 6 à évaluer et éventuellement un diaphragme 7 réglable muni de deux mouvements de translation permettant de choisir la zone d'éclairage sur le système,
- un analyseur de faisceau 8 mobile en translation et orientable en position mesurant la modulation périodique du faisceau et la valeur algébrique du rayon de courbure de l'onde émergente,
- un ordinateur 9 équiper d'algorithmes d'évaluation du front d'onde et d'un logiciel de calcul de la période de la modulation du faisceau émergent, fournissant la valeur de la distance focale du système dioptrique dans le domaine paraxial.

6. Dispositif selon la revendication 5, **caractérisé en ce que** le diaphragme 7 est totalement ouvert de façon à éclairer une zone étendue du système, le faisceau émergent débordant largement sur la pupille d'entrée de l'analyseur 8, l'ouverture numérique du faisceau analysé étant fixée par la pupille de l'analyseur.

7. Dispositif selon la revendication 5, **caractérisé en ce qu'**il emploie un analyseur de faisceau utilisant la technique du Shack-Hartmann.

8. Dispositif selon la revendication 5, **caractérisé en ce qu'**il emploie un analyseur de faisceau utilisant la technologie de l'interférométrie à décalage.

9. Dispositif selon les revendications 5, 6 et 8, **caractérisé en ce qu'**il détermine, avec un analyseur de faisceau utilisant la technologie de l'interférométrie à décalage, pour un échantillon commercial de lentille épaisse, des valeurs d'évaluation de mesure de focale comparables à celles déterminées, pour le même échantillon, par la méthode de mesure préconisée par la norme ISO 11979-2 ;

10. Dispositif selon les revendications 5, 6, 7 et 8 **caractérisé en ce qu'**il est adapté à la mesure de distances focales pour des applications métrologiques, notamment dans les domaines de l'ophtalmologie et de l'instrumentation scientifique et industrielle.

## Claims

1. Process for measuring the focal distances of any dioptric system, comprising the following operations:
a) using a light source and a collimator, a beam of light is formed that is essentially parallel, the transverse extension of which is controlled using a mechanical calibre,
b) within the collimated light beam, a periodic semi-transparent mire is positioned, whose form and period p are selected according to the nature, particularly spherical, aspherical, cylindrical or O-ring, of the dioptric system to be evaluated,
c) all or part of the light beam coming from the mire is applied in a zone of the dioptric system to be evaluated, ensuring that the value of the numerical aperture of the emerging beam makes the approximations of the paraxial domain compatible,
d) the beam emerging from the dioptric system is observed using a beam analyser that is mobile along the axis of propagation of the light, such that it covers as a minimum the entrance aperture of the analyser,
e) using the beam analyser, on the one hand the period p' of the light flow emerging is measured, and on the other hand, the algebraic value of the radius of curvature r of the emerging beam (positive or negative according to the divergent or convergent nature of the beam),
f) from these measures, the value of the focal distance f of the light pool of the dioptric system is deduced, a value formed by the scale factor p/p' multiplied by r.

2. Process according to claim 1, **characterized in that** no imagery is used.

3. Process according to claim 1, **characterized in that** it uses the measurement of a scale factor between the period of the mire and the modulation period of a beam emerging in any plane of the image space, provided that it covers as a minimum the entrance aperture of the analyser.

4. Process according to the preceding claims, **characterized in that** it analyses a beam across the whole aperture of the system such that it assesses the totality of its wave surface and measures any potential aberrations.

5. Device for measuring the focal distances of any dioptric system, comprising:
- a collimated and calibrated light beam generator comprising a light source (LED or laser emitter), transported by means of a fibre optic 1, a collimator 2 and a calibre 3 making it possible to adjust the transverse extension of the light beam,
- a periodic semi-transparent mire 4, modulating the incident beam according to a fixed period with a strong contrast,
- a mechanical support 5 intended to hold the dioptric system 6 to be evaluated and potentially an adjustable diaphragm 7 with two translatory movements making it possible to choose the light pool on the system,
- a sliding beam analyser 8 orientable in position, measuring the periodic modulation of the beam and the algebraic value of the radius of curvature of the emerging wave.
- a computer 9 equipped with wave front evaluation algorithms and software for calculating the modulation period of the emerging beam, providing the value of the focal distance of the dioptric system in the paraxial domain.

6. Device according to claim 5, **characterized in that** the diaphragm 7 is completely open so that it sheds light on an extensive zone of the system, the emerging beam extending largely beyond the entrance aperture of the analyser 8, the numerical aperture of the analysed beam being fixed by the aperture of the analyser.

7. Device according to claim 5, **characterized in that** it uses a beam analyser using the Shack-Hartmann technique.

8. Device according to claim 5, **characterized in that** it uses a beam analyser using shift interferometry technology.

9. Device according to claims 5, 6 and 8, **characterized in that** it determines, with a beam analyser using shift interferometry technology, for a commercial thick lens sample, the values for the evaluation of the focal measurement comparable to those determined, for the same sample, using the measurement method described in standard ISO 11979-2;

10. Device according to claims 5, 6, 7 and 8 **characterised in that** it is suitable for measuring focal distances for metrological applications, particularly in the areas of ophthalmology and scientific and industrial instrumentation.

## Patentansprüche

1. Verfahren zum Messen der Brennweite eines dioptrischen Systems, mit den folgenden Schritten:
a. es wird mit Hilfe einer Lichtquelle und eines Kollimators ein im Wesentlichen paralleler Lichtstrahl gebildet, dessen transversale Ausdehnung durch ein mechanisches Kaliber gesteuert wird,
b. es wird in dem kollimierten Lichtstrahl ein periodisch semi-transparentes Visier positioniert, dessen Form und Phase p nach der Art des zu bewertenden dioptrischen Systems ausgewählt werden, insbesondere sphärisch, asphärisch, zylindrisch oder torisch,
c. es wird der von dem Visier in eine Zone des zu bewertenden dioptrischen Systems kommende Lichtstrahl ganz oder teilweise verwendet, um sich zu vergewissern, dass der nummerische Öffnungswert des austretenden Strahls die Annäherungen des paraxialen Bereichs kompatibel macht,
d. es wird der vom dioptrischen System austretende Strahl mit einem Strahlanalysierer beobachtet, der entlang der Ausbreitungsachse des Lichts beweglich ist, so dass dieser die Eingangspupille des Analysierers minimal abdeckt,
e. es wird mit Hilfe des Strahlenanalysierers einerseits die Phase p' des austretenden Lichtstroms und andererseits der algebraische Wert des Krümmungsradius r der austretenden Welle gemessen (positiv oder negativ, je nachdem ob der Strahl divergiert oder konvergiert),
f. es wird aus diesen Messungen der Wert der Brennweite f in der vom dioptrischen System beleuchteten Zone abgeleitet, ein Wert, der durch die homothetische Beziehung p/p', multipliziert mit r, gebildet wird.

2. Verfahren nach Anspruch 1, **dadurch gekennzeichnet, dass** dieses keine optische Abbildung verwendet.

3. Verfahren nach Anspruch 1, **dadurch gekennzeichnet, dass** dieses das Maß einer homothetischen Beziehung zwischen der Phase des Visiers und der Phase der Modulation eines in eine vorgesehene Bildraumebene austretenden Strahls nutzt, dass dieses die Eingangspupille des Analysiergeräte minimal abdeckt.

4. Verfahren nach einem der vorhergehenden Ansprüche, **dadurch gekennzeichnet, dass** dieses einen Strahl über die gesamte Öffnung des Systems analysiert, derart, dass die Gesamtheit der Wellenoberfläche wahrgenommen und eventuelle Abweichungen gemessen werden.

5. Vorrichtung zur Messung von Brennweiten eines dioptrischen Systems, mit:
- einem Generator für einen kollimierten und kalibrierten Lichtstrahl, der eine Lichtquelle (LED oder Laser-Emitter) umfasst, der über eine Faseroptik 1, einen Kollimator 2, und einen Kaliber 3 verbunden ist, der ein Einstellen der transversalen Ausdehnung des Lichtstrahls erlaubt,
- einem Visier 4, das periodisch semi-transparent den einfallenden Lichtstrahl gemäß einer festen Phase mit scharfem Kontrast moduliert,
- einem mechanischen Träger 5 zum Aufnehmen des zu bewertenden dioptrischen Systems 6 und eventuell einer einstellbaren Blende 7, die mit zwei Translationsbewegungen versehen ist, welche das Auswählen der Beleuchtungszone des Systems erlauben.
- einem Strahlenanalysator 8, in seiner Position translatorisch bewegbar und ausrichtbar, der die periodische Modulation des Strahls und den algebraischen Wert des Krümmungsradius misst,
- einem Rechner 9, der mit Algorithmen zur Bewertung der Frontwelle und zur logischen Berechnung der Phase der Modulation des austretenden Strahls ausgestattet ist und den Wert der Brennweite des dioptrischen Systems im paraxialen Bereich bildet.

6. Vorrichtung nach Anspruch 5, **dadurch gekennzeichnet, dass** die Blende 7 ganz offen ist, derart, dass eine erweiterte Zone des Systems beleuchtet wird, wobei der austretende Strahl weit über die Eingangspupille des Analysiergeräts 8 hinausgeht, wobei die nummerische Öffnung des analysierten Strahls durch die Pupille des Analysiergeräts fixiert ist.

7. Vorrichtung nach Anspruch 5, **dadurch gekennzeichnet, dass** diese einen Strahlenanalysator verwendet, der die Shack-Hartmann Technik verwendet.

8. Vorrichtung nach Anspruch 5, **dadurch gekennzeichnet, dass** diese einen Strahlenanalysator verwendet, der die Technologie der Interferometrie mittels Verschiebung verwendet.

9. Vorrichtung nach den Ansprüchen 5, 6 und 8, **dadurch gekennzeichnet, dass** diese mit einem Strahlenanalysierer, der die Technologie der Interferometrie mittels Verschiebung für eine handelsübliches Muster einer dicken Linse verwendet, Werte aus der Bewertung der Brennweite bestimmt, die mit den für das gleiche Muster durch das durch die Norm ISO 11979-2 empfohlene Messverfahren bestimmten vergleichbar sind.

10. Vorrichtung nach des Ansprüchen 5, 6, 7 und 8, **dadurch gekennzeichnet, dass** dieses an die Messung von Brennweiten von metrologischen Anwendungen angepasst ist, insbesondere auf den Gebieten der Augenheilkunde und der wissenschaftlichen und industriellen Instrumente.
